# EUROPEAN PATENT SPECIFICATION

(11) **EP 0 598 040 B1**
(45) Date of publication and mention of the grant of the patent: **07.06.1995**
(21) Application number: 92917865.5
(22) Date of filing: 06.08.1992
(51) Int. Cl.: C01B 31/34, C22C 29/02

(54) **CARBOTHERMIC REACTION PROCESS FOR MAKING NANOPHASE WC-Co POWDERS**
KARBURIERUNGSPROZESS ZUR HERSTELLUNG VON WOLFRAMCARBID-KOBALT-PULVER MIT KORNGROESSEN IM NANOMETERBEREICH
PROCEDE DE REACTION CARBOTHERMIQUE SERVANT A FABRIQUER DES POUDRES DE WC-Co EN NANOPHASE

(30) Priority: 07.08.1991 US 741327
(43) Date of publication of application: 25.05.1994
(73) Proprietor: RUTGERS, THE STATE UNIVERSITY OF NEW JERSEY, New Brunswick, NJ 08903 (US)
(72) Inventor: MCCANDLISH, Larry, E., Highland Park, NJ 08904 (US); KEAR, Bernard, H., Whitehouse Station, NJ 08889 (US); KIM, Byoung-Kee, Edison, NJ 08817 (US)
(74) Representative: Findlay, Alice Rosemary
(86) International application number: US9206466
(87) International publication number: WO9302962

(56) References cited:
- EP-A- 0 292 195
- WO-A-91/07244
- DE-A- 3 830 111
- US-A- 2 160 670
- US-A- 2 176 802
- US-A- 3 077 385
- US-A- 3 932 594
- US-A- 4 579 713

## Description

The present invention discloses and claims a process for the production of nanophase WC-Co powders by thermochemical conversion of homogenous chemical precursor powders. The process utilizes a carbothermic reaction process, wherein the precursors are thermochemically converted by controlled gas-solid reactions at unexpectedly low temperatures to the nanophase powder products and results in a substantial decrease in overall reaction times.

International Patent Application WO91/07244 discloses a new spray conversion process for producing novel nanophase WC-Co composite powders. The process involves three main steps: 1) preparation of starting solutions of mixed salts by wet chemistry methods, 2) spray drying, calcining or roasting of the starting solutions to form homogeneous precursor powders, and 3) thermochemical conversion of the precursor powders to the desired end product powders by controlled gas/solid reactions in a fluid bed reactor. Subsequent consolidation of the powders into useable structural forms may be accomplished by thermal spraying, laser surfacing, cold compaction and sintering, and incipient melt forming.

The thermochemical conversion of the precursor powders according to the process disclosed in the above mentioned patent application occurs over a period of several hours.

An object of the present invention is to provide a method for producing nanoscale microstructures of WC-Co at reduced reaction temperatures and reduced reaction times, and the use of an external carbon bed as a CO regenerator for a more efficient process.

It is a further object to provide a method for producing nanoscale microstructures of WC-Co powder.

A carbothermic reaction process for the production of nanophase metal/metal-carbide particles, in accordance with the invention, comprises the steps of:
a) obtaining porous precursor particles which act as substrates for carbon infiltration;
b) infiltrating the porous precursor particles with carbon from a carbon source gas at a carbon activity greater than or equal to 1.0;
c) simultaneously reacting carbon and the source gas with the porous precursor powder particle substrates to form at least one carbide phase and removing remaining unreacted carbon by gasification with a second gas capable of combining with carbon.

The invention also relates to the nanophase powder particles produced by this process.

The process, which we refer to as the "carbothermic reaction process", is a modification of the spray conversion process known from WO91/07244. The process permits better control of the WC-Co microstructure at the submicron level and greatly improves conversion efficiency.

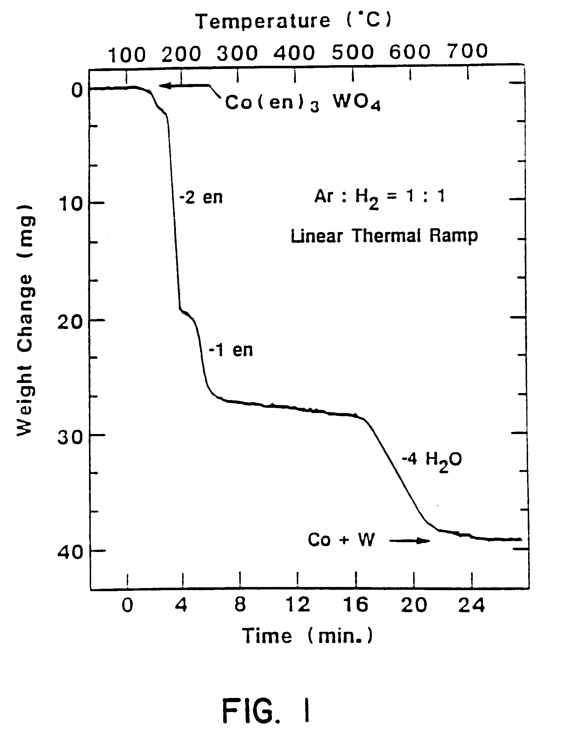

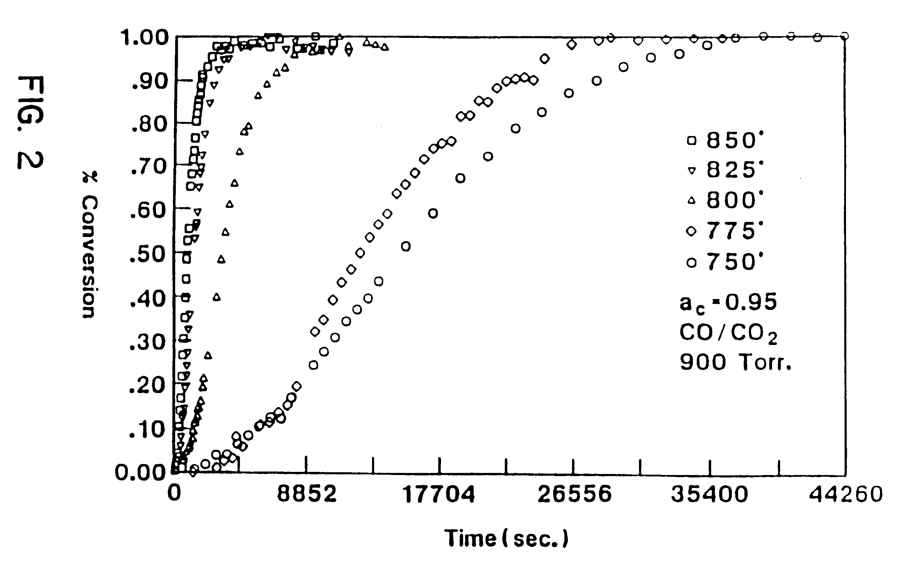

The known thermochemical process provided a means for producing nanophase WC-Co composite powders with a composition of 23% by weight cobalt. The steps are outlined below:
1. An aqueous solution of CoCl₂ is mixed with a solution of H₂WO₄ in ethylenediamine (en) to precipitate crystals of Co(en)₃WO₄ the prototype precursor compound.
2. The crystalline powders are reductively decomposed to form nanoporous/nanophase W-Co powder (see Figure 1).
3. The high surface area reactive intermediate, W-Co, is converted to WC-Co or other phases by reaction with CO₂/Co gas mixtures (see Figure 2).

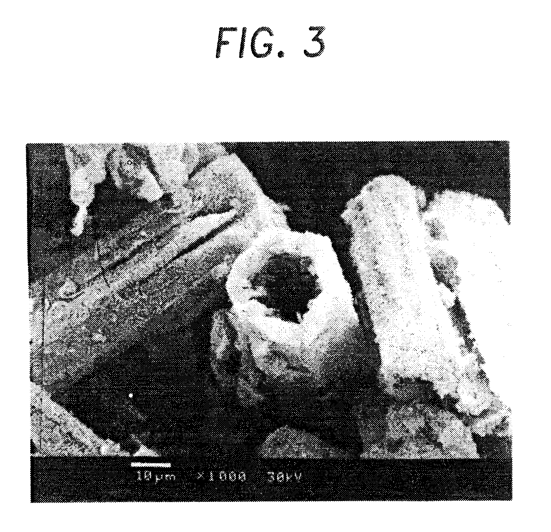

The nature of the microstructure of the composite is determined by controlling the temperature of the carburization reaction and the carbon activity of the gas phase. The resulting powder particles have roughly the same size (10 x 100 microns) and morphology (hexagonal prismatic rods) as the original particles precipitated from solution, but within these particles the microstructure is a WC-Co nanophase composite, Figure 3.

Using Co(en)₃WO₄ as the precursor compound necessarily fixes the Co/W atom ratio at 50/50 and the resulting WC-Co composition at 23 weight percent Co. This composition is at the low end of WC loadings that are used commercially. Thus, there is a need to extend the compositional range of precursors to include more tungsten. The range of WC-Co compositions of commercial interest is 3-30 weight percent Co.

To overcome this limitation in the original thermochemical process, we have adopted spray drying of solution mixtures as the preferred method of making precursor powders with a range of compositions. In spray drying the solvent phase is rapidly evaporated in a hot gas stream, leaving solid particles that are homogeneous mixtures. Under ideal conditions the solid particles are amorphous or microcrystalline, with no evidence of phase separation, even when starting from multicomponent solutions.

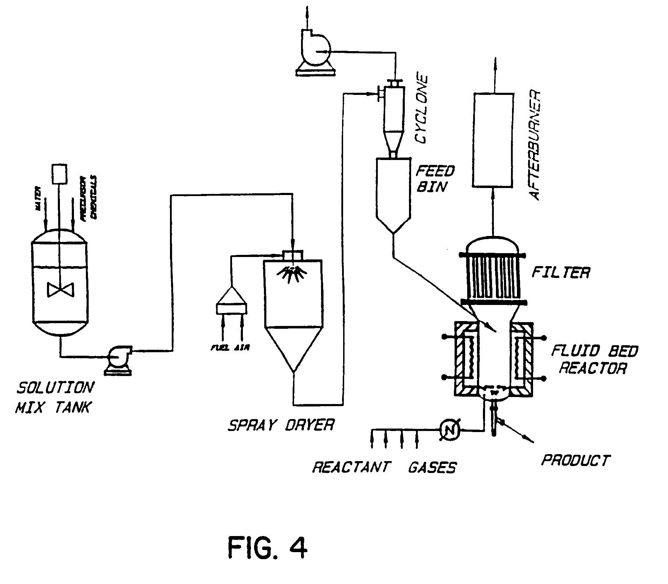

To summarize, our "Spray Conversion Processing" technology involves:
1. Preparation and mixing of the starting solution. This may take the form of premixing or in situ mixing at the is spray drying nozzle. The latter is favored when chemical reaction between the components can occur.
2. Spray drying, calcining or roasting of the starting solution to form homogeneous spherical precursor particles. These may be amorphous, microcrystalline, or mixed amorphous/microcrystalline in nature.
3. Thermochemical conversion of the precursor particles by controlled gas-solid reaction in a fluid bed reactor. This involves control of reaction time, bed temperature, and gas composition. See Figure 4.
In preparing the precursor powders the preferred starting point is an aqueous solution of ammonium metatungstate (AMT), (NH₄)₆(H₂W₁₂O₄₀)·4H₂O and cobalt nitrate, Co(NO₃)₂·6H₂O. AMT was chosen because among the polytungstates, it has the highest solubility in water. Water soluble Co(NO₃)₂·6H₂O was selected because it decomposes to form non-corrosive NOₓ compounds, which are easily scrubbed from the system. Chloride compounds, if used, can cause corrosion of the metal components of the reactor.

The Co/W atom ratio was adjusted to 1.0, 0.63, 0.21, and 0.1 by mixing appropriate quantities of AMT and cobalt nitrate. Spray drying and thermochemical conversion in CO₂/CO gas at a carbon activity of 0.95 yields the resulting nanophase WC-Co powders having 23, 15, 6, and 3 wt% Co binder phase, respectively. The particle microstructure of these powders was substantially the same as that obtained for WC-Co composite made from Co(en)₃WO₄ powder.

The thermochemical conversion of precursor powders in a fluid bed reactor has been a substantial improvement in the technology. While one can obtain sufficient powder for characterization purposes using a laboratory-scale fixed bed reactor, it is not easy to obtain the larger quantities needed for mechanical property evaluations, much less produce commercial quantities of powders for field testing. The difficulty has been circumvented by adopting an industrial-scale fluid bed reactor as the means for controlled thermochemical conversion of the precursor powder to WC-Co nanophase composite powder. A fluid bed reactor is ideal for thermochemical conversion of the precursor powder because of the uniform bed temperature and constant gas/solid environment throughout the bed.

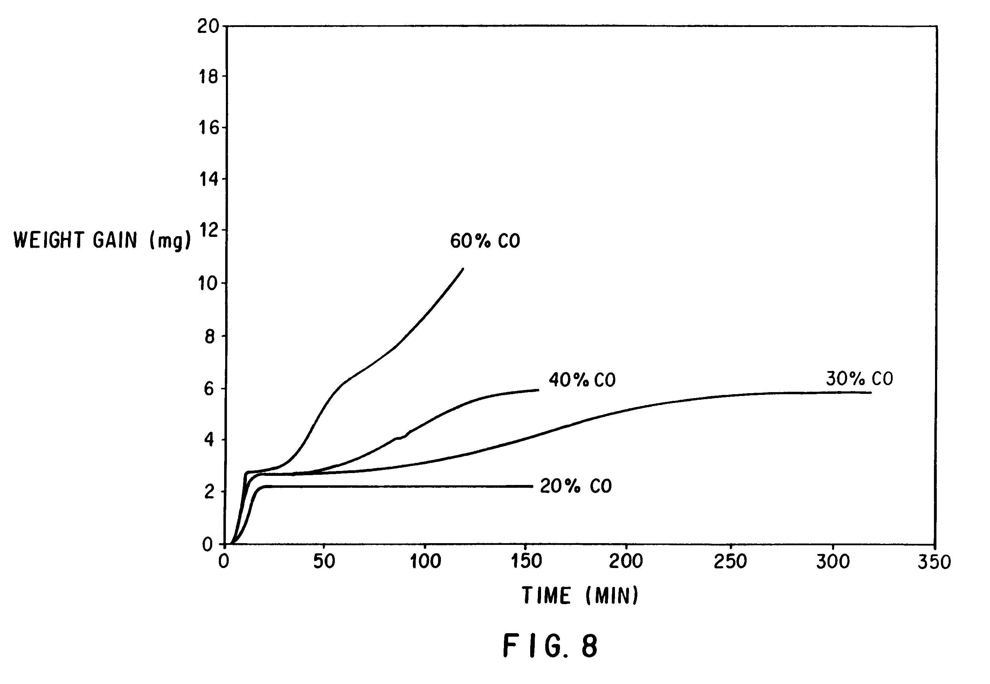

As noted above, a large excess of carbon is deposited in the powder bed when pure CO is used as a carbon source gas. This excess carbon is removed by gasification, using a CO/CO₂ mixture of low carbon activity in a final processing step. Complete removal of the uncombined carbon is extremely important because such carbon impurity contributes to porosity in parts that are made from WC-Co powder by liquid phase sintering. If CO/H₂ is used as the carbon source gas, the build up of uncombined carbon is reduced. As shown in figure 8, if the carbon concentration is set below 60%, the deposition of uncombined carbon is slowed. At CO concentrations below about 20%, the carburization reaction stops at the W₂C stage without further carbon build up. At CO concentrations of about 30% to 40%, WC is formed in the carburization reaction and uncombined carbon only builds very slowly. This slow build up of uncombined carbon is of great practical importance because it limits the amount of carbon needed to be removed in the final processing step.

The avoidance of uncombined carbon build-up can be rationalized in the following manner. Presumably both CO and H₂ dissociate on the surface of the metallic alloy intermediate thereby providing a population of surface carbon, oxygen, and hydrogen atoms. A surface carbon atom can easily diffuse into the alloy and react with W to form WC. However, if the diffusion of the carbon atom is blocked or slowed as the WC concentration builds, the surface carbon atom can be gasified by combining with surface hydrogen atoms to form CH₄. Similarly, a surface oxygen atom can be gasified by reaction with surface hydrogen atoms to form water. In effect, H₂ keeps the surface of the powder clean as the W-CO powder is carburized to WC-Co powder.

### Brief Description of the Drawings

Figure 1 is a graph depicting the reductive decomposition of Co(en)₃WO₄ powder.

Figure 2 is a graph showing the conversion of W-Co to nanophase WC-Co powder by carburization.

Figure 3 is a photomicrograph showing the morphology of WC-Co powders prepared from Co(en)₃ WO₄ powder.

Figure 4 is a flow diagram of the spray conversion process.

Figure 5 is a thermogravimetric analysis trace of the carbothermic reaction synthesis of WC-10 wt % Co.

Figure 6 are photomicrographs of the microstructures of converted powders.

Figure 7 depicts line broadening of the (100) WC diffraction peak from WC-10 wt% Co powder produced by carbothermic reaction at 700, 750, 800, and 850°C.

Figure 8 depicts carbon pick up during the carbonization step of the carbothermic process using CO/H₂ mixtures as the carbon source gas.

### Summary of the Invention

We have improved the conversion efficiency and reduced the microstructural scale by our new improvements in the technology, which we call carbothermic reaction processing. Until recently all thermochemical conversions were conducted in CO₂/Co gas mixture with carbon activities in the range .35 to .95. In all cases, the rapid initial uptake of carbon gives rise to a metastable phase, prior to its conversion to the thermodynamically stable WC-Co composition. This has two consequences. First, the metastability of the intermediate phase or phases prolongs the overall conversion time and increases the cost. Second, the longer reaction time permits particle coarsening and limits the ultimate microstructural scale attainable. For example, if reduction of the precursor powder yields a nanophase mixture of W and Co, the carburization step may result in the coarsening of the microstructure from 0.01 to 0.3 microns. Even coarser microstructures can be generated by carburization at higher temperatures.

However, we have discovered that the rapid carbon uptake in the first stage of carburization is the key to reducing the microstructural scale of the WC-Co powder. Such uptake of carbon occurs at unexpectedly low temperatures, apparently because of catalytic decomposition of CO by the cobalt phase. This phenomenon can be exploited to deposit amorphous carbon within the nanopores of the W-Co particles at low temperatures. The high dispersion of carbon throughout the W-Co particles and the short diffusion distances accelerate the conversion to WC-Co, while preserving the desirable ultrafine microstructure. Thus, the microstructure can easily be reduced below 0.1 micron and there is the potential for achieving .01 micron or less in WC grain size.

We have also discovered that a substantial decrease in conversion time is realized by carburizing at an activity in excess of 1.0 and then completing the conversion at a carbon activity below 1.0, preferably about 0.5. In the examples set forth below, we will show that reaction times can be as low as 45 minutes. This amounts to a tenfold and greater decrease in time compared to the time necessary to effect total carburization of the powders converted according to our previously disclosed processes. In those processes the carbon activity was held substantially constant throughout the entire carburization process.

In practice, the amount of carbon introduced exceeds the stoichiometric requirement for the complete conversion to WC-Co. This fixes the carbon activity during the reaction to 1.0, thereby producing the maximum reaction rate. After the conversion reaction is complete, the excess uncombined or free carbon is removed by introducing a CO₂/Co gas mixture of about 0.5 carbon activity, depending on the reaction temperature.

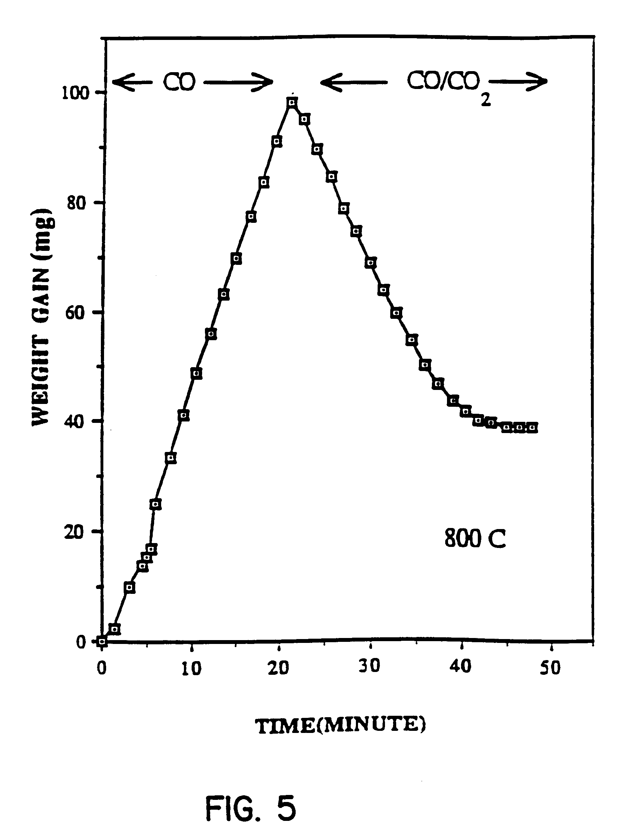

Figure 5 shows a typical thermogravimetric analysis trace of such a carbothermic reaction treatment at 800°C. It is evident that the rapid carbon uptake greatly reduces the formation of a metastable intermediate phase and promotes the formation of WC-Co.

With reference to Figure 5, during the first phase of carburization, corresponding to the addition of CO gas, carbon activity equals or exceeds 1.0. The CO gas undergoes catalytic decomposition and carbon precipitates on and is dispersed throughout the W-Co particles. The ultrafine microstructure is preserved during the time when carbon precipitation results in an almost one hundred percent increase in particle weight, as is indicated at the twenty minute mark of carburization

Excess unreacted carbon is then removed by lowering the carbon activity to approximately 0.5 by altering the atmosphere to a CO/CO₂ mixture, wherein excess carbon reacts with CO2 to form carbonmonoxide:

C + CO₂ → 2 CO

Carbon is removed, resulting in a rapid weight reduction which levels off approximately 20 minutes after reducing the carbon activity (or 40 minutes after initiating carburization). By means of thermal gravimetric analysis, the practitioner of the invention can determine the time at which to reduce the carbon activity and ultimately the time at which the carburization process is completed.

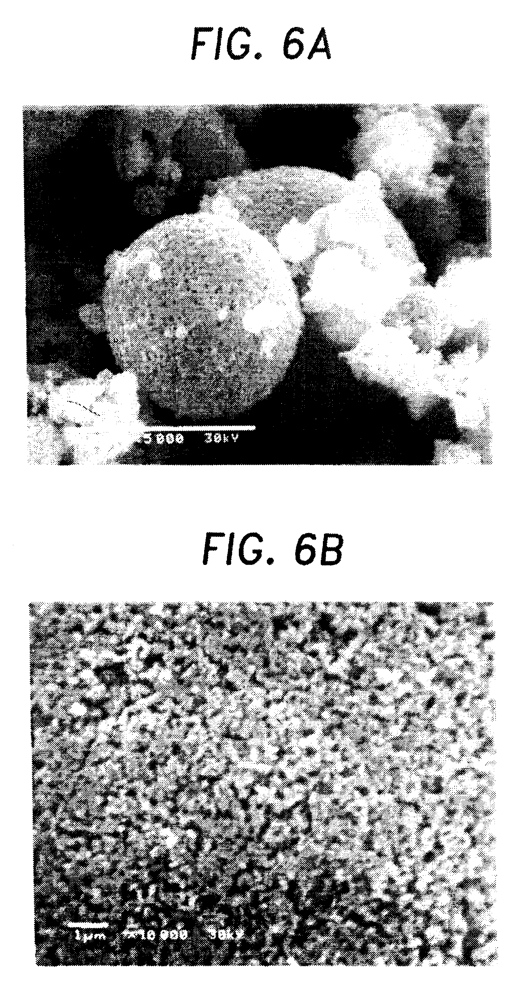

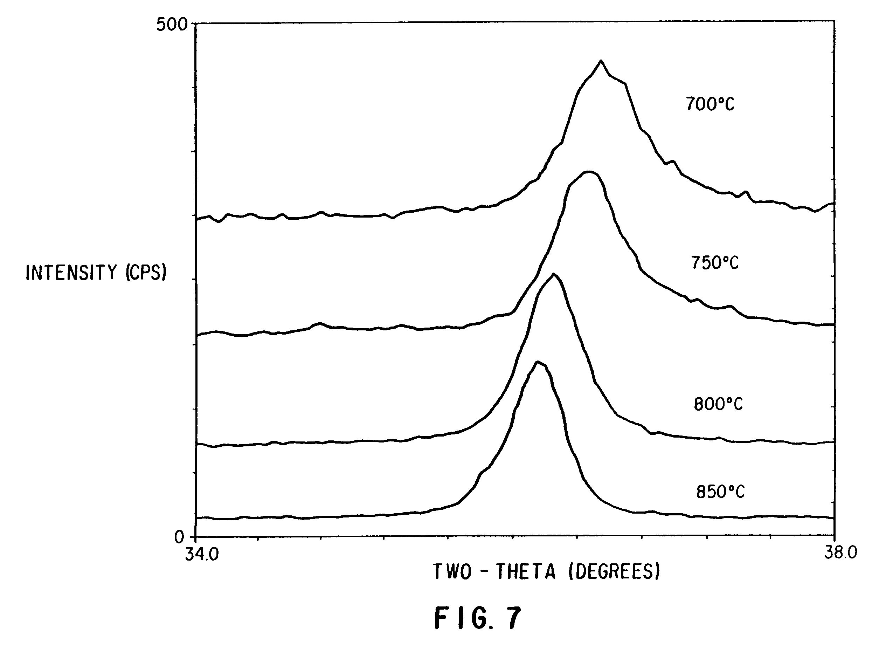

Figure 6 shows the corresponding microstructure of the converted powder with WC grain size between 30-100 nm. Further is evidence for the grain size reduction with decreasing reaction temperature is shown in Figure 7. It is seen that the 100 peak is both broadened and shifted as the synthesis temperature decrease and the grain size gets smaller.

The processes disclosed herein are compatible with existing conventional technologies for producing WC-Co powders, which involves the following sequence of steps:
1. A tungsten containing powder, usually ammonium paratungstate, is spread as a thin layer on graphite trays. The trays are placed in a muffle furnace where the salt is reduced to tungsten powder by a reducing gas.
2. The tungsten powder is removed from the furnace and mixed with carbon powder.
3. The mixture is again spread on the graphite trays, which are returned to the furnace where the tungsten reacts with the carbon at high temperature (1400-1600 C) to form WC powder.
4. The WC powder is removed from the furnace and ball milled with Co powder in order to coat the WC particles with Co.
5. The WC-Co powder is combined with a binder, usually paraffin or polyethylene glycol, and spray dried to form a spherical grade powder. The binder acts as a die-wall lubricant in cold compaction of preforms prior to liquid phase sintering.

A novel variation of the conventional commercial process discussed above is to introduce carbothermic reaction processing as the means to produce WC-Co powder in a single step. Suitable equipment would include a muffle furnace. The homogeneous spray dried composite precursor powder, which might be prereduced or preoxidized and possibly carbon infiltrated, is spread on the graphite trays and further reaction processing is effected in the muffle furnace by setting the carbon activity of the reaction atmosphere by controlling the amount of CO and CO₂ entering the furnace and by further controlling the furnace temperature. A person skilled in the art would recognize that minimizing bed thickness enhances the addition or removal of carbon into or out of the particles so that mass transfer occurs uniformly throughout the bed. Not only does this process eliminate mechanical mixing steps (ball milling), it results in a WC-Co mixture of greater homogeneity, permits the carburization reactions to occur at much lower temperatures, and shortens the overall reaction times. Low reaction temperatures and short reaction times favor the formation of the finest microstructures.

A novel variation of the carbothermic process discussed above is to introduce carbon in the precursor solution, either as a fine dispersion or as a compound that can be readily carbonized (such as sucrose), rather than from the gas phase. Our experience with this variation has been that satisfactory carburization can be accomplished at reasonable reaction rates only at temperatures greater than 950°C. This is because solid-solid reactions are not as fast as gas-solid reactions, making it harder to develop and maintain nanostructures. A concern with gas-solid reactions is the large amount of CO gas required to carburize W to WC; two moles of CO are required to produce one mole of WC. In the preferred embodiment of the carbothermic process, outlet gas that is rich in CO₂ gas is recycled through an external hot bed of carbon where CO₂ is converted back to CO. Thus, in this closed loop system carbon is transported in the gas phase from an external carbon source to the fluid bed reactor where the carburization of W occurs. An advantage of this process variation is the ability to independently control the temperature of the external carbon bed and that of the fluid bed reactor, which allows an increased degree of control compared to the case where carbon is supplied as a fine dispersion in the precursor powder.

The process discussed above shall now be set forth in greater detail with reference to the following examples.

### Examples

Examples 1-3 describe preparation of suitable precursor compounds. Examples 4-8 were carried out in a thermogravimetric analyzer. Similar results were obtained on gram-scale quantities of powder in a tube furnace (fixed bed reactor). Examples 9-11 were carried out on kilogram-scale quantities of powder in 4", 6" or 14" diameter fluid bed reactors.

### Example 1

WC-23% Co from crystalline Co(en)₃WO₄ precursor powders. An aqueous solution of CoCl₂ was combined with a solution of H₂WO₄ in ethylenediamine to precipitate crystalline Co(en)₃WO₄. Low concentrations of the reactants in these solutions produce hexagonal rods (20x100 microns) while high concentrations produced flat plates (20x5x1 microns). When Co(en)₃WO₄ solution is spray dried the resulting microcystalline particles are spherical, and after fluid bed conversion to WC-Co, have microstructures that are identical to those obtained from the single crystal particles.

### Example 2

The use of WC-Co from amorphous/microcrystalline Co(en)₃WO₄ crystalline precursor, prepared under near equilibrium conditions by precipitation from solution, necessarily fixes the Co:W ratio at 1:1, which results in WC-23% Co powder after fluid bed conversion. In order to achieve a wider range of WC-Co compositions it is necessary to prepare homogeneous mixtures of Co(en)₃WO₄ with another source of W, e.g. H₂WO₄. This can be accomplished by rapid spray drying of mixtures of Co(en)₃WO₄ (solution A) and H₂WO₄ in aqueous NH₄OH (solution B) . For example, the Co/W ratio may be adjusted to the values of 1.0, 0.63, 0.21, and 0.1 by mixing appropriate quantities of solutions A and B. When these solutions are spray dried in a laboratory spray dryer fitted with a 5 cm (2") rotary atomiser spinning at 35000 rpm;
inlet and outlet temperatures 205 and 115°C, respectively; and a starting solution feed rate of 156 ml/min the resulting powders are amorphous or microcrystalline, depending on the Co/W ratio in the starting solution.

### Example 3

WC-Co from amorphous AMT-CoCl₂ precursor powders.

An alternative precursor solution, which is preferred solution, involves the use of ammonium metatungstate (AMT) and CoCl₂·6H₂O or Co(NO₃)₂·6H₂O or Co(CH₃COO)₂·4H₂O. The use of AMT is advantageous because of its high solubility in water and its commercial availability.

Solution C was prepared by dissolving AMT and CoCl₂·H₂O or Co(NO₃)₂·6H₂O or Co(CH₃COO)₂·4H₂O in water. The Co:W ratio was fixed at 0.37, which yields 10% Co in the final WC-Co composite powder.

The starting solution was spray dried in a laboratory spray dryer fitted with a pressure nozzle atomizer (55 kN/m² (80 PSI)). The inlet and outlet temperatures were maintained at a nominal 220 and 130°C. The feed solution was pumped into the dryer at 220 ml/min. SEM micrographs of the dried powder showed spherical particles, which were shown to be amorphous by X-ray diffraction.

### Example 4. Process at 850°C

A 100 mg sample of AMT/CoCl₂ precursor powder, of a composition suitable for making WC-10 wt% Co, was reduced in flowing (90 cc/min) Ar/H₂ (2:3) for 45 minutes to yield 66 mg of porous nanophase W-Co.

Carbon infiltration was achieved using flowing CO (90 cc/min). The carbon uptake resulted in a weight increase to 76 mg in a 20 minute interval. During the next 24 minutes in a flowing CO/CO₂ stream (a_{c} = 0.5) the carburization reaction was completed and the excess free carbon was removed. The final nanophase WC-Co powder sample weight was 70 mg.

### Example 5. Process at 800°C

A 100 mg sample of AMT/CoCl₂ was converted to nanophase WC-Co powder, as in Example 1, but with a processing temperature of 800°C; Ar/H₂ reduction for 45 minutes; carbon infiltration for 20 minutes; and carburization and free carbon removal for 24 minutes.

### Example 6. Process at 750°C

A 100 mg sample of AMT/CoCl₂ was converted to nanophase WC-Co powder, as in Example 1, but with a processing temperature of 750°C; Ar/H₂ reduction for 90 minutes; carbon infiltration for 20 minutes; and carburization and free carbon removal for 90 minutes.

### Example 7. Process at 700°C

A 100 mg sample of AMT/CoCl₂ was converted to nanophase WC-Co powder, as in Example 1, but with a processing temperature of 700°C; Ar/H₂ reduction for 150 minutes; carbon infiltration for 35 minutes; and carburization and free carbon removal for 265 minutes.

### Example 8. Process at 700/800°C

A 100 mg sample of AMT/CoCl₂ was converted to nanophase WC-CO powder, as in Example 1, but with Ar/H₂ reduction for 150 minutes at 700°C; carbon infiltration in CO for 35 minutes at 700°C; heating to 800°C in 10 minutes in flowing CO; and simultaneous carburization and free carbon removal in CO/CO₂ for 25 minutes at 800°C.

### Example 9. Process at 750°C

A 890 g sample of spray dried AMT/Co(NO₃)₂nH₂O precursor powder, of a composition suitable for making WC-10 wt% Co, was charged into a 10 cm (4") diameter fluid bed reactor. The precursor powder was fluidized in N₂ gas at a velocity of 40 m/min (130 ft/min) while the temperature was increased from room temperature to 700° in 10 minutes. At 700°C the fluidization velocity was decreased to 18 m/min (60 ft/min) and the fluidization gas was changed to N₂/H₂ (cracked NH₃) in a 1:3 ratio while the temperature was raised to 750°C. The precursor powder was reduced at this temperature for 110 minutes to form a nanophase W/Co composite powder. Next the fluidization gas was changed to pure CO at 0.9 m/min (30 ft/min) for 100 minutes. During this period the W/Co particles were carburized to nanophase WC/Co and the bed temperature increased briefly to 800°C due to the exothermic reaction. The 100 minute reaction time was required to completely eliminate all traces of M₁₂C impurity. After completion of the carburization reaction, excess carbon was removed by fixing the carbon activity at 0.4 at 750°C in a fluidizing gas mixture of CO/CO₂ (0.9 m/min (30 ft/min)). All excess carbon was removed after 170 minutes and the reactor was allowed to cool to room temperature in a flow of N₂ at 0.3 m/min (10 ft/min). X-ray analysis showed that the product was free of M₁₂C and thermogravimetric analysis comfirmed the absence of uncombined carbon. The x-ray line broadening was consistent with a WC grain sizes on the order of 20 nm.

### Example 10, Process at 750°C

A 1.6 kg sample of spray dried AMT/Co(NO₃)₂6H₂O precursor powder, of a composition suitable for making WC-16 wt% Co, was charged into a 6" diameter fluid bed reactor. The precursor powder was fluidized in N₂ gas at a velocity of 40 m/min (130 ft/min) while the temperature was increased from room temperature to 700°C in 20 minutes. At 700°C the fluidization velocity was decreased to 18 m/min (60 ft/min) and the fluidization gas was changed to N₂/H₂ (cracked NH₃) in a 1:3 ratio while the temperature was raised to 750°C. The precursor powder was reduced at this temperature for 120 minutes to form a nanophase W/Co composite powder. Next the fluidization gas was changed to pure CO at 0.9 m/min (30 ft/min) for 100 minutes. During this period the W/Co particles were carburized to nanophase WC/Co and the bed temperature increased briefly to 800°C due to the exothermic reaction. The 100 minute reaction time was required to completely eliminate all traces of M₁₂C impurity. After completion of the carburization reaction, excess carbon was removed by fixing the carbon activity at 0.4 at 750°C in a fluidising gas mixture of CO/CO₂ (0.9 m/min (30 ft/min )). All excess carbon was removed after 180 minutes and the reactor was allowed to cool to room temperature in a flow of N₂ at 0.6 m/min (20 ft/min). X-ray analysis showed that the product was free of M₁₂C and thermogravimetric analysis confirmed the absence of uncombined carbon. The x-ray line broadening was consistent with a WC grain sizes on the order of 20 nm.

### Example 11. Process In 14" Diameter Fluid Bed Reactor

A 36 cm (14") diameter fluid bed reactor was equipped with a mechanical agitator to aid in the fluidization of a large powder charge, and with a gas preheater and freeboard heater to facilitate its isothermal operation. The reactor was preheated to 370°C (nominal) before a 32 kg sample of spray dried and precalcined precursor powder, suitable for making WC-11 wt% Co powder, was added to the reactor. The powder was added incrementally to the reaction vessel via a double-ball-valve feed lock over a one hour 10 period. Nitrogen gas was kept flowing in the vessel during the powder addition. The precursor powder was reduced in 1:1 N₂:H₂ gas as the reactor was heated from 635°C to 750°C (nominal) over a period of two hours. Carbon was added to the powder at 750°C (nominal) for two hours using CO gas. Excess carbon was removed is from the powder over a four hour period using a CO₂/Co gas mixture. Because of insufficient gas preheating, the reactor could not be operated isothermally. Thus, during the critical final decarburization step of the process, the carbon activity varied between 0.3 and 0.7 due to temperature gradients within the reactor. This processing produced a pyrophoric WC-Co powder, which was passivated using N₂/air mixtures. 25 kg of nanostructured WC-11 wt% Co powder was produced. Example 12 was carried out on kilogram-scale quantities of powder in a fixed bed tubular reactor.

### Example 12 Process at 775°C in a Fixed Bed Reactor

Approximately 2.8 Kg. of precursor powder, which was prepared by calcining spray dried AMT/Co (NO₃)₂nH₂O powder, was distributed on two stainless steel trays to form powder beds approximately 1.25 cm (½") deep, 10 cm (4") wide, and 100 cm (40") long. The trays were stacked and inserted into a stainless steel tubular reactor. The powder was reduced in flowing hydrogen (15 liters/min) for 6 hours at 775°C. The powder was carburized at 775°C in 35% CO in H² (21.6 liters/min) for 2 hours followed by 1/2 hour in CO/CO₂ (23 liters/min) at a carbon activity of 0. 5. This "carburization cycle" was repeated 5 times. X-ray analysis of the WC-Co powder, so produced, showed the powder to be free of WO₂ and M₁₂C impurities. TGA analysis showed total uncombined carbon to be less than 0.25%. A short final treatment in CO/CO₂ reduced the uncombined carbon level to less than 0.01%. The process yielded approximately 2Kg of nanostructured WC-Co powder.

## Claims

1. A carbothermic reaction process for the production of nanophase metal/metal-carbide particles comprising the steps of:
a) obtaining porous precursor particles which act as substrates for carbon infiltration;
b) infiltrating the porous precursor particles with carbon from a carbon source gas at a carbon activity greater than or equal to 1.0;
c) simultaneously reacting carbon and the source gas with the porous precursor powder particle substrates to form at least one carbide phase and removing remaining unreacted carbon by gasification with a second gas capable of combining with carbon.

2. A process as claimed in Claim 1, wherein the second gas is capable of combining with an atomic constituent of the carbon source gas so that the reaction of the second gas results in removal of impurities from the surface of the precursor particles, effecting a nanophase metal/metal-carbide particle relatively free of free, unreacted carbon and other impurities.

3. A process as claimed in either Claim 1 or Claim 2, wherein remaining unreacted carbon is removed using a gas or gas mixture with carbon activity less than 1.0.

4. A process as claimed in Claim 3, wherein the removal of unreacted carbon is effected by a gasification reaction achieved with gases selected from the group consisting of CO₂, CO/CO₂_{,} CO/H₂, CH₄/H₂.

5. A carbothermic reaction process as claimed in either Claim 3 or Claim 4, wherein the process is effected in a tube furnace, a muffle furnace, a belt furnace, a rotary kiln, a fluid bed furnace, or any other furnace suited for achieving infiltration of carbon from a carbon source gas at a carbon activity greater than or equal to 1.0 and removal of unreacted carbon by gasification using a gas or gas mixture having a carbon activity less than 1.0.

6. A process as claimed in any preceding Claim, wherein the precursor powder is obtained by subjecting a solution of metal ions, prepared by dissolution of metals or metal compounds, to a drying treatment comprising spray calcining, spray roasting, spray drying, or freeze drying.

7. A process as claimed in Claim 6, wherein the solution of metal ions is prepared from tungsten and cobalt compounds.

8. A process as claimed in Claim 7, wherein the tungsten and cobalt compounds are ammonium metatungstate and cobalt nitrate, and the solution is aqueous.

9. A process as claimed in any one of Claims 6 to 8, wherein the precursor powder is further prepared by a partial or full chemical reduction.

10. A process as claimed in any one of Claims 6 to 8, wherein the precursor powder is further prepared by a partial or full oxidation.

11. A process as claimed in any preceding Claim, wherein the infiltration with carbon from a carbon source gas is achieved with gases selected from the group consisting of CO, CO/CO₂, CO/H₂, CH₄/H₂ and preferably using a carbon gas source regenerator.

12. A process as claimed in Claim 11, wherein the infiltration of the porous precursor powder particle with carbon is achieved using low temperature catalytic decomposition of the selected gas or gas mixture by the precursor powder particle substrate.

13. A process as claimed in any proceeding Claim, wherein the nanophase metal/metal-carbide particles produced are WC-Co composites.

14. A nanophase powder particle produced by a method as claimed in any preceding Claim.

## Patentansprüche

1. Carbothermisches Reaktionsverfahren zur Herstellung von Nanophasen-Metall/Metallcarbid-Teilchen mit den Schritten, daß man
a) poröse Vorstufen-Teilchen bereitstellt, die als Substrate für das Eindringen von Kohlenstoff wirken;
b) Kohlenstoff aus einem als Kohlenstoffquelle dienenden Gas bei einer Kohlenstoffaktivität von größer als oder gleich 1,0 in die porösen Vorstufen-Teilchen eindringen läßt;
c) gleichzeitig Kohlenstoff und das als Quelle dienende Gas mit den porösen Vorstufen-Pulverteilchen-Substraten umsetzt, um mindestens eine Carbidphase zu bilden und verbleibenden, nicht umgesetzten Kohlenstoff durch Vergasung mit einem zweiten Gas entfernt, welches sich mit Kohlenstoff vereinigen kann.

2. Verfahren nach Anspruch 1, wobei sich das zweite Gas mit einem atomaren Bestandteil des als Kohlenstoffquelle dienenden Gases vereinigen kann, so daß die Reaktion des Zweiten Gases die Entfernung von Verunreinigungen von der Oberfläche der Vorstufen-Teilchen bewirkt, was zu einem Nanophasen-Metall/Metallcarbid-Teilchen führt, welches relativ frei von freiem, nicht umgesetzten Kohlenstoff und anderen Verunreinigungen ist.

3. Verfahren nach Anspruch 1 oder 2, wobei man den verbleibenden, nicht umgesetzten Kohlenstoff unter Verwendung eines Gases oder Gasgemisches entfernt, dessen Kohlenstoffaktivität weniger als 1,0 beträgt.

4. Verfahren nach Anspruch 3, wobei man das Entfernen von nicht umgesetztem Kohlenstoff durch eine Vergasungsreaktion bewirkt, die mit Gasen erreicht wird, die ausgewählt werden aus der Gruppe CO₂, CO/CO₂, CO/H₂, CH₄/H₂.

5. Carbothermisches Reaktionsverfahren nach Anspruch 3 oder 4, wobei man das Verfahren in einem Rohrofen, einem Muffelofen, einem Bandofen, einem Drehofen, einem Wirbelschichtofen oder einem anderen Ofen durchführt, der zum Eindringen von Kohlenstoff aus einem als Kohlenstoffquelle dienenden Gas mit einer Kohlenstoffaktivität von größer als oder gleich 1,0 geeignet ist und zum Entfernen von nicht umgesetzten Kohlenstoff durch Vergasung unter Verwendung eines Gases oder eines Gasgemisches geeignet ist, welches eine Kohlenstoffaktivität von weniger als 1,0 aufweist.

6. Verfahren nach einem der vorhergehenden Ansprüche, wobei man das Vorstufen-Pulver dadurch erhält, daß man eine durch Auflösen von Metallen oder Metallverbindungen bereitete Lösung von Metallionen einer Trocknungsbehandlung unterzieht, umfassend das Sprühkalzinieren, das Sprührösten, das Sprühtrocknen oder das Gefriertrocknen.

7. Verfahren nach Anspruch 6, wobei man die Lösung der Metallionen aus Wolfram- und Cobaltverbindungen bereitet.

8. Verfahren nach Anspruch 7, wobei die Wolfram- und Cobaltverbindungen Ammoniummetawolframat und Cobaltnitrat sind und die Lösung wäßrig ist.

9. Verfahren nach einem der Ansprüche 6 bis 8, wobei man das Vorstufen-Pulver außerdem durch teilweise oder vollständige chemische Reduktion herstellt.

10. Verfahren nach einem der Ansprüche 6 bis 8, wobei man das Vorstufen-Pulver weiter durch teilweise oder vollständige Oxidation bereitet.

11. Verfahren nach einem der vorhergehenden Ansprüche, wobei man das Eindringen von Kohlenstoff aus einem als Kohlenstoffquelle dienenden Gas mit Gasen erreicht, die ausgewählt sind aus der Gruppe CO, CO/CO₂, CO/H₂, CH₄/H₂ und bevorzugt unter Verwendung eines Regenerators für das als Kohlenstoffquelle dienende Gas.

12. Verfahren nach Anspruch 11, wobei man das Eindringen von Kohlenstoff in die porösen Vorstufen-Pulver-Teilchen dadurch erreicht, daß man das gewählte Gas oder das Gasgemisch durch das Vorstufen-Pulverteilchen-Substrat bei niedriger Temperatur katalytisch zersetzt.

13. Verfahren nach einem der vorhergehenden Ansprüche, wobei die hergestellten Nanophasen-Metall/Metallcarbid-Teilchen WC-Co-Komposite sind.

14. Nanophasen-Pulver-Teilchen, hergestellt mit einem Verfahren gemäß einem der vorhergehenden Ansprüche.

## Revendications

1. Un procédé de réaction carbothermique pour la production de particules de métal/métal-carbure en nanophase comprenant les étapes suivantes :
a) Obtention d'un précurseur à particules poreuses agissant comme des substrats pour l'infiltration du carbone;
b) Infiltration des particules poreuses du précurseur avec du carbone d'une source gazeuse de carbone dont l'activité est plus grande ou égale à 1,0;
c) Simultanément, on fait réagir le carbone et la source gazeuse avec les substrats de particules poreuses du précurseur afin de former au moins une phase carbure et éliminer le carbone restant non activé par gazéification avec un second gaz capable de se combiner avec le carbone.

2. Un procédé selon la revendication 1, dans lequel le second gaz est capable de se combiner avec un constituant atomique de la source gazeuse de carbone afin que la réaction avec le second gaz permette d'enlever des impuretés de la surface des particules du précurseur, en utilisant une nanophase de particules métal/métal-carbure relativement libre de carbone libre, inerte, ou d'autres impuretés.

3. Un procédé selon soit la revendication 1 ou soit la 2, dans lequel le carbone inerte restant et éliminé en utilisant un gaz ou un mélange gazeux avec une activité carbonique inférieure à 1,0.

4. Un procédé selon la revendication 3, dans lequel l'élimination du carbone inerte est effectuée par une réaction de gazéification à l'aide de gaz sélectionné à partir du groupe constitué par les CO₂, CO/CO₂, CO/H₂, CH₄/H₂.

5. Un procédé de réaction carbothermique selon n'importe laquelle des revendications 3 ou 4, dans lequel le procédé est préparé dans un réchauffeur tubulaire, un four à moufle, un four à tapis, un fourneau rotatif, un four de recuit à lit fluidisé, ou tout autre four permettant l'infiltration du carbone depuis une source gazeuse de carbone d'une activité carbonique au moins égale à 1,0 et le déplacement du carbone inerte par gazéification en utilisant un gaz ou un mélange gazeux ayant une activité carbonique inférieure à 1,0.

6. Un procédé selon n'importe laquelle des revendications précédentes dans lequel le précurseur pulvérulent est obtenu en soumettant une solution d'ions métal préparée par dissolution de métaux ou de composés métalliques, à un traitement de séchage comprenant une calcination par pulvérisation, grillage par pulvérisation, séchage par pulvérisation, ou séchage par réfrigération.

7. Un procédé selon la revendication 6, dans lequel la solution d'ions métal est préparée à partir de composés de tungstène et de cobalt.

8. Un procédé selon la revendication 7, dans lequel les composés de tungstène et de cobalt sont le métatungstate d'ammonium et le nitrate de cobalt, et la solution aqueuse.

9. Un procédé selon n'importe laquelle des revendications 6 à 8, dans lequel le précurseur pulvérulent est ensuite préparé par réduction chimique partielle ou totale.

10. Un procédé selon n'importe laquelle des revendications 6 à 8, dans lequel le précurseur pulvérulent est ensuite préparé par oxydation partielle ou totale.

11. Un procédé selon n'importe laquelle des revendications précédentes, dans lequel l'infiltration au carbone depuis la source gazeuse de carbone est obtenue avec des gaz sélectionnés à partir d'un groupe constitué de CO, CO/CO₂, CO/H₂, CH₄/H₂ et utilisant préférablement un régénérateur de la source gazeuse de carbone.

12. Un procédé selon la revendication 11, dans lequel l'infiltration au carbone de la particule poreuse pulvérulente du précurseur est obtenue en utilisant la décomposition catalytique à basse température des gaz ou mélanges gazeuse sélectionnés par le substrat de la particule en poudre du précurseur.

13. Un procédé selon n'importe laquelle des revendications précédentes, dans lequel les particules métal/métal-carbure produites au cours de la nanophase sont des composés WC-CO.

14. Une particule en poudre produite en nanophase par n'importe quelle méthode précédemment revendiquée.
